# EUROPÄISCHE PATENTSCHRIFT

(11) **EP 2 754 822 B1**
(45) Veröffentlichungstag und Bekanntmachung des Hinweises auf die Patenterteilung: **22.04.2020**
(21) Anmeldenummer: 14000024.1
(22) Anmeldetag: 06.01.2014
(51) Int. Cl.: E05F 15/608

(54) **Antriebseinheit für eine Karusselltür mit einer integrierten Blockier- und/oder Bremseinrichtung**
Drive unit for a revolving door with an integrated blocking and/or braking device
Unité d'entraînement pour une porte à tambour avec dispositif de blocage et/ou de freinage intégré

(30) Priorität: 14.01.2013 DE 102013000420
(43) Veröffentlichungstag der Anmeldung: 16.07.2014
(73) Patentinhaber: dormakaba Deutschland GmbH, 58256 Ennepetal (DE)
(72) Erfinder: Busch, Sven, D-44227 Dortmund (DE)
(74) Vertreter: Balder IP Law, S.L.

(56) Entgegenhaltungen:
- EP-A1- 0 431 363
- CN-A- 102 170 191
- DE-A1-102004 033 304
- US-A1- 2005 045 078

## Beschreibung

Die vorliegende Erfindung betrifft eine Antriebseinheit für eine Karusselltür mit einem elektronisch kommutierten Vielpolmotor gemäß Anspruch 1 sowie eine Karusselltür mit einer solchen Antriebseinheit gemäß Anspruch 9.

### STAND DER TECHNIK

Aus der DE 10 2010 024 108 A1 ist eine gattungsbildende Antriebseinheit für eine Karusselltür mit einem elektronisch kommutierten Vielpolmotor bekannt, und der Vielpolmotor ist tellerförmig ausgebildet und weist eine runde, flache Grundstruktur auf. Der Vielpolmotor besitzt eine Abtriebswelle, die mit einem Drehkreuz der Karusselltür verbunden ist, und die Karusselltür kann über den Vielpolmotor angetrieben werden.

Vielpolmotoren sind auch unter der Bezeichnung der Torquemotoren bekannt und weisen grundsätzlich auf einer Kreisbahn angeordnete Spulenelemente auf, die ebenfalls auf einer Kreisbahn angeordneten Magnetelementen gegenüberstehen, beispielsweise innenseitig, außenseitig oder axial gegenüberstehend, sodass ein hochpoliger, drehmomentstarker Direktantrieb gebildet ist. Der Rotorteil des Vielpolmotors kann mit dem Drehkreuz der Karusselltür so verbunden werden, dass die Rotationsachse des Drehkreuzes mit der Rotationsachse des Rotorteils des Vielpolmotors zusammenfällt. Dadurch kann das Drehkreuz auf der Seite des Vielpolmotors sogar durch den Vielpolmotor selbst gelagert werden, und der Vorteil des flachzylindrischen, kleinbauenden Vielpolmotors ist eine gute Integrierbarkeit in eine Karusselltür, beispielsweise bodenseitig, jedoch beispielsweise auch deckenseitig.

Drehkreuze in Karusselltüren müssen mit einer Bremseinrichtung ausgestattet werden, die es ermöglicht, bei Sensierung einer Gefahr für Personen, die die Karusselltür durchqueren, die Drehung des Drehkreuzes kurzfristig still zusetzen. Hierfür werden die Karusselltüren und insbesondere die Drehkreuze häufig mit einer Sensortechnik ausgestattet, und wird eine Gefahr für eine Person sensiert, müssen bestimmte Verzögerungswerte erreicht werden, um das Drehkreuz möglichst in kurzer Zeit anzuhalten. Hierzu können elektromotorische Bremswirkungen gegebenenfalls nicht ausreichend sein, insbesondere wenn aus Sicherheitsgründen sehr hohe Verzögerungswerte des Drehkreuzes erreicht werden müssen.

Ähnliche motorische Konzepte sind auch in CN102170191A offenbart. Dieses Dokument offenbart eine Antriebseinrichtung gemäß dem Oberbegriff von Anspruch 1.

Die EP 2 072 737 A2 zeigt eine Karusselltür mit einer konventionellen Antriebseinheit, die einen Motor und ein Getriebe umfasst. Rückseitig des Motors befindet sich eine Bremseinrichtung, die auf die Motorwelle wirkt, und eine stufenlos verstellbare Bremskraft kann eingestellt werden. Die Antriebseinheit mit dem Motor und dem Getriebe sowie mit der Bremseinrichtung ist in einem Einbauraum oberhalb des Deckenelementes der Karusselltür aufgenommen, der eine erhebliche Bauhöhe aufweisen muss, um die Antriebseinheit mit der Bremseinrichtung aufzunehmen. Die Bremseinrichtung umfasst einen konventionellen Bremssattel, der eine Bremsscheibe umgreift, sodass der typische Aufbau einer Radscheibenbremse gebildet ist. Würde eine derart ausgestaltete Radscheibenbremse mit einem Vielpolmotor gekoppelt, so würden die Vorteile des raumminimalen Einbaus des Vielpolmotors in die Karusselltür nicht mehr vorteilhaft umsetzbar sein.

### OFFENBARUNG DER ERFINDUNG

Aufgabe der Erfindung ist die Weiterbildung einer Antriebseinheit für eine Karusselltür, die einen kleinen Einbauraum erfordert und wenigstens eine Eingriffsvorrichtung zum Eingriff in die Drehbewegung des Drehkreuzes der Karusselltür umfasst.

Diese Aufgabe wird ausgehend von einer Antriebseinheit für eine Karusselltür gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Antriebseinheit für eine Karusselltür mit einem elektronisch kommutierten Vielpolmotor ausgeführt ist, wobei der Vielpolmotor einen scheibenförmigen oder topfförmigen Statorteil aufweist, der an einem ruhenden Strukturbauteil der Karusselltür anordbar ist, und wobei der Vielpolmotor einen scheibenförmigen oder topfförmigen Rotorteil aufweist, der mit einem Drehkreuz der Karusselltür getriebelos verbindbar ist, wobei der Statorteil und der Rotorteil eine planparallele Anordnung zueinander aufweisen und wobei zwischen dem Statorteil und dem Rotorteil eine Eingriffseinrichtung zum Eingriff in die Drehbewegung des Rotorteils am Statorteil angeordnet ist.

Die Erfindung geht dabei von dem Gedanken aus, eine Eingriffseinrichtung in den Vielpolmotor zu integrieren, sodass die Möglichkeit gegeben ist, den Vielpolmotor und insbesondere den Rotorteil des Vielpolmotors getriebelos mit dem Drehkreuz der Karusselltür zu verbinden. Folglich muss kein Getriebe oder ein sonstiges übertragendes Bauteil zwischen dem Rotorteil und dem Drehkreuz vorgesehen werden, an dem eine Eingriffseinrichtung zum Eingriff in die Drehbewegung des Drehkreuzes integriert werden könnte. Die erfindungsgemäße Ausführungsform des Vielpolmotors mit zwei zueinander etwa planparallel sich erstreckenden Rotor- und Statorteilen schafft einen Einbauraum, in den die Eingriffseinrichtung aufgenommen werden kann. Dabei kann die Eingriffseinrichtung von der Innenseite des Vielpolmotors gegen den Rotorteil wirken und einen Eingriff in die Drehbewegung des Rotorteils und folglich in die Drehbewegung des Drehkreuzes schaffen.

Vorteilhafterweise kann das Verhältnis aus Höhe zu Durchmesser der im Wesentlichen runden, flach ausgebildeten Grundstruktur des elektronisch kommutierten Vielpolmotors einen Wert von wenigstens 1:3, vorzugsweise von wenigstens 1:4, besonders bevorzugt von wenigstens 1:5 und am meisten bevorzugt von 1:8 und mehr aufweisen. Das Verhältnis aus Höhe zu Durchmesser ergibt sich durch den parallelen Abstand des scheibenförmigen oder topfförmigen Statorteils zum scheibenförmigen oder topfförmigen Rotorteil des Vielpolmotors zum Durchmesser des Statorteils und/oder des Rotorteils. Dadurch, dass die Spulenelemente und die Magnetelemente zwischen dem Statorteil und dem Rotorteil angeordnet sind, lassen sich erst die Verhältnisse aus Höhe zu Durchmesser von bis zu 1:8 und mehr erreichen, ohne dass die zwischen dem Statorteil und dem Rotorteil integrierte Eingriffseinrichtung die erforderliche geringe Bauhöhe des Vielpolmotors vergrößern würde. Dabei hat sich gezeigt, dass sogar Grundstrukturen von Vielpolmotoren als Antrieb für Karusselltüren zum Einsatz kommen können, die ein Verhältnis aus Höhe zu Durchmesser von mehr als 1:12 erreichen können.

Erfindungsgemäß ist die Eingriffseinrichtung als Blockiereinrichtung zum Blockieren der Drehbewegung des Rotorteils am Statorteil ausgebildet, wobei die Blockiereinrichtung ruhend am Statorteil angeordnet sein kann und zum formschlüssigen Eingriff in den Rotorteil ausgebildet ist. Mit der Blockiereinrichtung kann der Rotorteil in seiner Drehbewegung am Statorteil blockiert werden, wobei die Blockierwirkung durch einen Formschluss zwischen dem Statorteil und dem Rotorteil mittels der Blockiereinrichtung erzielt wird. Da das Drehkreuz der Karusselltür drehstarr mit dem Rotorteil des Vielpolmotors verbunden ist, kann durch die im Vielpolmotor integrierte Blockiereinrichtung die Drehbarkeit auch des Drehkreuzes blockieren. Die Blockierung des Drehkreuzes kann beispielsweise notwendig sein, wenn kurzfristig durch entsprechende Aktivierung der Blockiereinrichtung Personen der Zugang in ein Gebäude verwehrt werden soll. Die Blockiereinrichtung kann beispielsweise fernausgelöst werden, und das Drehkreuz kann blockiert werden, sodass es auch unter Aufbringung händischer Kraft nicht um seine Rotationsachse gedreht werden kann.

Die Blockiereinrichtung weist einen Aktuator und ein Blockierelement auf, das durch den Aktuator in eine Aufnahmeöffnung im Rotorteil formschlüssig einbringbar ist. Durch das formschlüssige Einbringen des Blockierelementes in die Aufnahmeöffnung im Rotorteil wird eine Verdrehsicherung des Drehkreuzes sichergestellt, die nicht lediglich auf einem Reibschluss beruht. Der Aktuator der Blockiereinrichtung kann beispielsweise eine Magnetspule umfassen, die auf einem mit dem Blockierelement verbundenen Magnetanker wirkt, wenn die Magnetspule elektrisch aktiviert wird und sodass das Blockierelement insbesondere eine Hubbewegung ausführt. Damit kann durch eine Bestromung der Magnetspule die Blockiereinrichtung aktiviert werden, und das Blockierelement fährt durch das Anziehen des Magnetankers an die Magnetspule in die Aufnahmeöffnung im Rotorteil ein. Nach einer konstruktiven Abwandlung der Blockiereinrichtung kann auch vorgesehen sein, dass die Blockiereinrichtung stromlos blockiert, und erst bei Bestromung der Magnetspule wird das Blockierelement aus dem Formschluss in der Aufnahmeöffnung gelöst. Alternativ zu einer Hubbewegung des Blockierelementes kann die Blockiereinrichtung auch anders ausgeführt werden, und es kann auch ein Drehmagnet vorgesehen sein. Alternativ zur Ausführungsform der Blockiereinrichtung basierend auf einem Hubmagneten kann die Blockiereinrichtung durch einen Motor mit einem Getriebe ausgeführt sein, wie diese beispielsweise aus elektrischen Lenkradverriegelungseinrichtungen für Kraftfahrzeuge bekannt sind. Durch den Formschluss der Blockiereinrichtung können Haltemomente des Drehkreuzes von beispielsweise mehr als 1000 Nm erreicht werden.

Nach der erfindungsgemäßen Antriebseinheit weist der Rotorteil eine Eingriffsscheibe auf, und die Eingriffsscheibe weist eine und vorzugsweise eine Anzahl von Aufnahmeöffnungen auf, in die das Blockierelement bei einer Hubbewegung eingreift. Wird die Blockiereinrichtung aktiviert und fährt das Blockierelement in Richtung der Aufnahmeöffnungen aus, so greift das Blockierelement schließlich in eines der Aufnahmeöffnungen ein.

Durch die Anzahl der Aufnahmeöffnungen zum Eingriff des Blockierelementes kann bestimmt werden, in wie vielen und in welchen Winkelstellungen das Drehkreuz verriegelt werden kann. Beispielsweise können wenigstens 12, vorzugsweise 24, besonders bevorzugt 36 und am meisten bevorzugt wenigstens 48 Aufnahmeöffnungen auf der Kreisbahn in der Eingriffsscheibe oder im Rotorteil selbst eingebracht sein, wobei die Aufnahmeöffnungen Durchgangsbohrungen oder Sacklochbohrungen bilden können, alternativ können die Aufnahmeöffnungen auch durch Zähne oder Ähnliches gebildet sein, sodass auf unterschiedliche Weise ein Formschluss zwischen der Eingriffsscheibe oder dem Rotorteil selbst und dem Blockierelement erreicht werden kann.

Nach einer vorteilhaften Weiterbildung der erfindungsgemäßen Antriebseinheit kann eine Steuereinheit vorgesehen sein, die insbesondere im Bereich zwischen dem Statorteil und dem Rotorteil des Vielpolmotors aufgenommen ist, wobei die Steuereinheit zur Aktivierung der Eingriffseinrichtung ausgebildet ist. Weiterhin kann die Steuereinheit über eine elektrische Leitung mit einem Bedien- und/oder Interfacemodul verbunden sein, über das die Eingriffseinrichtung ebenfalls ausgelöst werden kann, beispielsweise durch Betätigen des Bedien- und/oder Interfacemoduls durch eine Person. Weiterhin kann die Steuereinheit ein Funkmodul umfassen, sodass auch über eine drahtlose Kommunikation der Steuereinheit mit einer externen Einrichtung, beispielsweise dem Empfang eines Gebäudes, die Eingriffseinheit aktiviert werden kann, um Personen beispielsweise den Zutritt zum Gebäude zu verwehren.

Zwischen dem Statorteil und dem Rotorteil kann eine Anzahl von Spulenelementen angeordnet sein, die am Statorteil aufgenommen sind, und wobei zwischen dem Statorteil und dem Rotorteil ferner eine Anzahl von Magnetelementen angeordnet sein kann, die am Rotorteil angeordnet sind. Dabei können die Spulenelemente auf einer Kreisbahn am Statorteil angeordnet sein, sodass ein Spulenring gebildet ist, wobei die Eingriffseinrichtung und insbesondere auch die Steuereinheit im Bereich innerhalb des Spulenringes angeordnet ist.

Gemäß einer weiteren vorteilhaften Ausführungsform der Antriebseinheit kann ferner vorgesehen sein, die Eingriffseinrichtung zusätzlich als Bremseinrichtung zum Bremsen der Drehbewegung des Rotorteils am Statorteil auszubilden. Dabei kann wenigstens eine Eingriffseinrichtung eine Blockiereinrichtung bilden, und wenigstens eine weitere Einrichtung kann eine Bremseinrichtung bilden. Die Bremseinrichtung kann ebenfalls ruhend am Statorteil angeordnet sein und zum reibschlüssigen Eingriff in den rotierenden Rotorteil ausgebildet sein. Hierzu kann die Bremseinrichtung beispielsweise einen Aktuator und ein Bremselement aufweisen, wobei das Bremselement durch Aktivieren des Aktuators gegen einen scheibenförmigen und vorzugsweise ringförmigen Abschnitt des Rotorteils in Reibschluss gebracht werden kann. Beispielsweise kann der ringförmige Abschnitt am Rotorteil zur Aufnahme der Magnetelemente dienen, die entweder innenseitig oder außenseitig am ringförmigen Abschnitt angebracht sind. An der den Magnetelementen gegenüberliegenden Innenseite oder Außenseite des ringförmigen Abschnittes kann das Bremselement reibschlüssig zur Anlage gelangen, wobei die auftretenden Brems- Normalkräfte vorzugsweise radial zur Rotationsachse des Rotorteils verlaufen. Das Rotorteil kann über eine Lageranordnung am Statorteil drehbar aufgenommen sein, und Bremsgegenkräfte, die durch den Rotorteil aufgrund der Einwirkung durch das Bremselement auftreten, können über die Lageranordnung aufgenommen werden. Damit entsteht der Aufbau einer Trommelbremse, wie diese auch in der Fahrzeugtechnik Anwendung findet.

Durch die im Vielpolmotor integrierte Bremseinrichtung kann das Drehkreuz der Karusselltür äußerst schnell angehalten werden. Dies ist insbesondere dann wichtig, wenn eine Sensorik der Karusselltür durch eine Person ausgelöst wird, da in diesem Fall damit zu rechnen wäre, dass die Person mit dem Drehkreuz kollidieren könnte und sich möglicherweise hierdurch verletzen könnte. Zwar kann das Drehkreuz auch elektromotorisch abgebremst werden, jedoch kann der Bremsweg mit der Bremseinrichtung erheblich reduziert werden. Insbesondere wird angestrebt, die Drehflügel des Drehkreuzes über einen Weg von maximal 10 cm abzubremsen, da dies ungefähr dem Elastizitätsweg der Sicherheits-Gummi-kanten an den Türflügeln entspricht, die die Sensorik zur Erkennung einer Kollision beispielsweise mit einer Person bilden.

Die vorliegende Erfindung richtet sich ferner auf eine Karusselltür mit einer Antriebseinheit nach Anspruch 1. Die in Zusammenhang mit der Antriebseinheit aufgeführten weiteren Merkmale und zugehörigen Vorteile finden für die erfindungsgemäße Karusselltür ebenfalls Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematisierte, perspektivische Ansicht einer Karusselltür mit einem deckenseitig montierten Vielpolmotor aufweisend eine Eingriffseinrichtung,
- Figur 2: eine Querschnittsansicht durch einen Vielpolmotor als Antriebseinheit für eine Karusselltür, wobei im Vielpolmotor eine Eingriffseinrichtung in Form einer Blockiereinrichtung gezeigt ist,
- Figur 3: eine Draufsicht auf eine Eingriffsscheibe als Bestandteil des Rotorteils und
- Figur 4: ein weiteres Ausführungsbeispiel eines Vielpolmotors in einer quergeschnittenen Ansicht mit einer ersten Eingriffseinrichtung, die als Blockiereinrichtung ausgebildet ist und mit einer weiteren Eingriffseinrichtung, die als Bremseinrichtung ausgebildet ist.

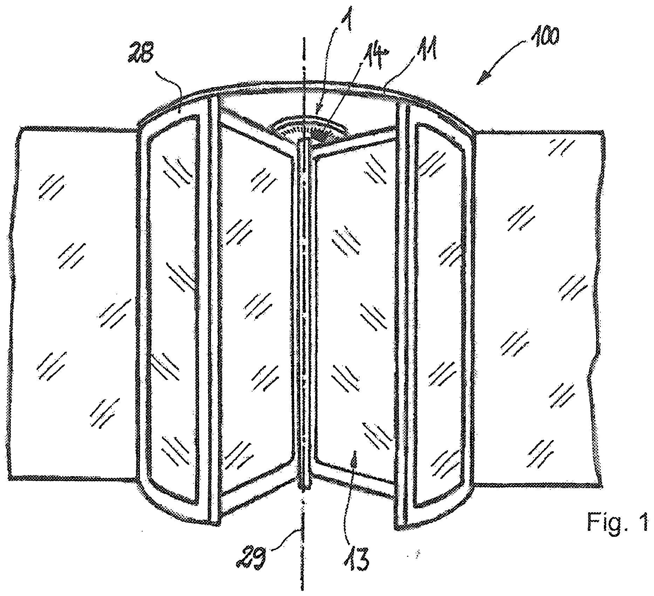

Figur 1 zeigt eine Karusselltür 100 in einer schematisierten, perspektivischen Ansicht. Die Karusselltür 100 weist einen Rahmen 28 auf, und ein Deckenelement des Rahmens 28 bildet ein Strukturbauteil 11, an dem ein Vielpolmotor 1 angeordnet ist und zum rotatorischen Antrieb eines Drehkreuzes 13 um eine Antriebsachse 29 dient. Alternativ kann das Strukturbauteil 11 auch ein bodenseitiges Bauteil der Karusselltür oder eines Gebäudes bilden. Der Vielpolmotor 1 befindet sich somit in einer deckenmontierten Anordnung zwischen dem Strukturbauteil 11 und dem Drehkreuz 13. Der Vielpolmotor 1 besitzt eine flachzylindrische, tellerartige oder scheibenartige Grundform, wodurch die unter deckenseitige Anordnung des Vielpolmotors 1 erst möglich ist.

Um die Drehbewegung des Drehkreuzes 13 zu verzögern oder zu blockieren, befindet sich integriert im Vielpolmotor 1 eine Eingriffseinrichtung 14, die lediglich schematisch angedeutet ist. Die Eingriffseinrichtung 14 ermöglicht ein Verzögern des Drehkreuzes 13 zusätzlich zu einer elektromotorischen Verzögerung oder zusätzlich zu einem elektromotorischen Blockieren des Drehkreuzes 13, und verschiedene Ausführungsformen sind in Zusammenhang mit Ausführungsbeispielen in den folgenden Figuren näher dargestellt.

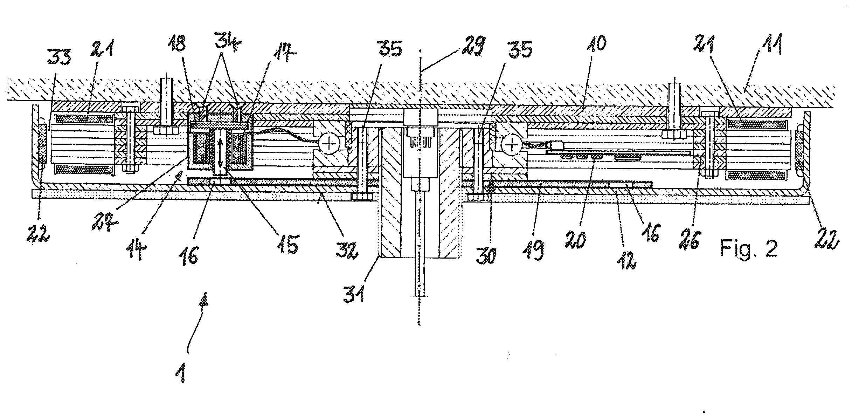

Figur 2 zeigt ein erstes Ausführungsbeispiel eines Vielpolmotors 1 in unterseitiger Anordnung an einem Strukturbauteil 11 in einer quer geschnittenen Ansicht. Der Vielpolmotor 1 weist einen scheibenförmigen Statorteil 10 und einen topfförmigen Rotorteil 12 auf. Der Rotorteil 12 ist über eine Lageranordnung 30 um eine Antriebsachse 29 drehbar am ruhenden Statorteil 10 angeordnet, und der Rotorteil 12 umfasst eine Abtriebswelle 31, mit der das Drehkreuz 13 der Karusselltür 100 verbunden werden kann. Alternativ kann das Drehkreuz 13 mit der Außenfläche 32 des Rotors 12 verbunden werden, sodass eine direkte Anordnung der Drehflügel des Drehkreuzes 13 mit dem Rotorteil 12 ermöglicht ist, ohne eine Abtriebswelle 31 zu benötigen.

Zwischen dem Statorteil 10 und dem Rotorteil 12 sind Spulenelemente 21 und Magnetelemente 22 angeordnet, und die Spulenelemente 21 sind an einem ringförmigen Abschnitt 26 am Statorteil 10 aufgenommen. Die Magnetelemente 22 sind innenseitig im topfförmigen Rotorteil 12 aufgenommen und umschließen die auf einer Kreisbahn angeordneten Spulenelemente 21 unter Bildung eines umlaufenden Luftspaltes 33 außenseitig. Damit ist der Vielpolmotor 1 beispielhaft als Außenläufer ausgebildet.

Erfindungsgemäß ist am Statorteil 10 eine Eingriffseinrichtung 14 angeordnet, und die Eingriffseinrichtung 14 befindet sich zwischen dem Statorteil 10 und dem sich parallel zum Statorteil 10 erstreckenden Rotorteil 12. Die Eingriffseinrichtung 14 ist als Blockiereinrichtung 27 ausgeführt und zur Befestigung der Blockiereinrichtung 27 am Statorteil 10 sind Schraubelemente 34 vorgesehen.

Der Rotorteil 12 umfasst eine Eingriffsscheibe 19, und wird die Blockiereinrichtung 27 aktiviert, kann ein Blockierelement 15 der Blockiereinrichtung 27 in Aufnahmeöffnungen 16 eingreifen, die in der Eingriffsscheibe 19 eingebracht sind. Die Eingriffsscheibe 19 ist über Schraubelemente 35 starr mit der Grundstruktur des Rotors 12 verbunden, wobei die Schraubelemente 35 zugleich die Lageranordnung 30 mit dem Rotorteil 12 verbinden.

Die Aufnahmeöffnungen 16 befinden sich auf einer Kreisbahn in der Eingriffsscheibe 19 auf einem Radius relativ zur Antriebsachse 29, die eine Flächennormale auf die Eingriffsscheibe 19 bildet und zugleich die Symmetrieachse darstellt. Greift das Blockierelement 15 in eines der Aufnahmeöffnungen 16 ein, so ist eine Verdrehung des Rotorteils 12 am Statorteil 10 verhindert. Durch eine drehstarre Anordnung des Drehkreuzes 13 am Rotorteil 12 wird zugleich das Drehkreuz 13 in der Karusselltür 100 blockiert.

Zur Aktivierung der Blockiereinrichtung 27 ist eine Steuereinheit 20 vorgesehen, die ebenfalls im Bereich zwischen dem Statorteil 10 und dem Rotorteil 12 angeordnet ist. Über die Steuereinheit 20 kann eine Magnetspule 17 der Blockiereinrichtung 27 bestromt werden, wodurch ein Magnetanker 18 eine Hubbewegung ausführt, und der Magnetanker 18 ist mit dem Blockierelement 15 wirkverbunden. Somit greift das bolzenartige Blockierelement 15 in den Rotor 12 ein, wenn die Magnetspule 17 bestromt ist. Im stromlosen Zustand der Blockiereinrichtung 27 kann folglich der Rotorteil 12 frei um die Antriebsachse 29 rotieren.

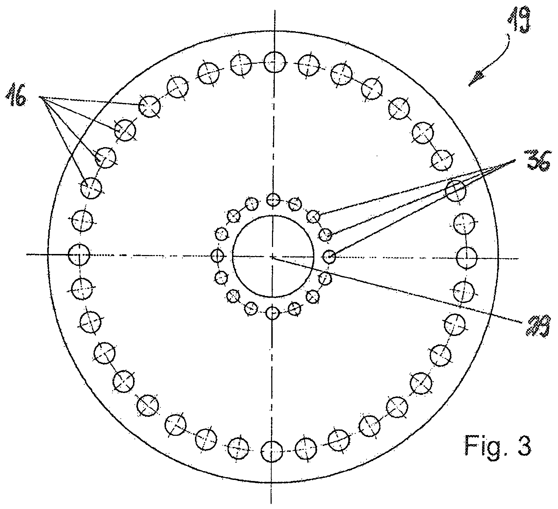

Figur 3 zeigt eine Draufsicht auf die Eingriffsscheibe 19, in der eine Anzahl von Aufnahmeöffnungen 16 eingebracht ist. Die Aufnahmeöffnungen 16 befinden sich auf einer Kreisbahn in einem Radius, der sich um die Antriebsachse 29 erstreckt, die mit der Mittelachse der Eingriffsscheibe 19 zusammenfällt. Weiterhin sind in die Eingriffsscheibe 19 Durchgangsöffnungen 36 eingebracht, durch die sich die Schraubelemente 35 hindurcherstrecken können.

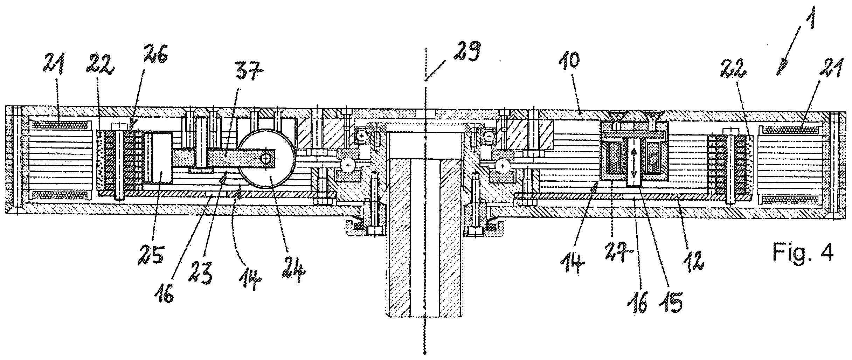

Figur 4 zeigt schließlich ein weiteres Ausführungsbeispiel des Vielpolmotors 1 mit einem Statorteil 10 und einem Rotorteil 12 und zwischen dem Statorteil 10 und Rotorteil 12 angeordneten Spulenelementen 21 und Magnetelementen 22. Die Spulenelemente 21 sind außenseitig am Statorteil 10 einen Spulenring bildend angeordnet, wobei sich der Spulenring um die Antriebsachse 29 herum erstreckt. Innenseitig des Spulenrings sind die Magnetelemente 22 angeordnet, die an einem ringförmigen Abschnitt 26 des Rotorteils 12 angeordnet sind. Der Statorteil 10 ist geschlossen ausgeführt und umschließt den Rotorteil 12 planflächig auf beiden Seiten, wobei der Rotorteil 12 eine Grundstruktur aufweist, die sich trotz des geschlossenen Statorteils 10 parallel zum Statorteil 10 erstreckt. Durch die innenseitige Anordnung der Magnetelemente 22 innerhalb des Spulenrings, gebildet durch die Spulenelemente 21, ist der Vielpolmotor 1 beispielhaft als Innenläufer ausgebildet.

Das Ausführungsbeispiel zeigt eine erste Eingriffseinrichtung 14, die als Blockiereinrichtung 27 ausgeführt ist und eine zweite Eingriffseinrichtung 14, die als Bremseinrichtung 23 ausgeführt ist. Beide Eingriffseinrichtungen 14 sind dabei ruhend und innenseitig am Statorteil 10 angeordnet.

Die Blockiereinrichtung 27 ist mit einem Blockierelement 15 dargestellt, das auf gleiche Weise in Aufnahmeöffnungen 16 eingreifen kann, wie in Zusammenhang mit Figur 2 bereits beschrieben. Die Aufnahmeöffnungen 16 sind in diesem Ausführungsbeispiel beispielhaft in der Grundstruktur des Rotorteils 12 eingebracht.

Die als Bremseinrichtung 23 ausgebildete Eingriffseinrichtung 14 besitzt einen Aktuator 24, der über eine mechanische Koppeleinrichtung 37 auf ein Bremselement 25 einwirken kann. Wird der Aktuator 24 aktiviert, so kann das Bremselement 25 innenseitig gegen den ringförmigen Abschnitt 26 des Rotorteils 12 wirken, um ein Bremsmoment zwischen dem Statorteil 10 und dem Rotorteil 12 zu erzeugen. Der ringförmige Abschnitt 26 bildet dabei den Abschnitt des Rotorteils 12, an dem die Magnetelemente 22 aufgenommen sind.

Durch die Bremseinrichtung 23 kann der Rotorteil 12 alternativ oder zusätzlich zu einer elektromotorischen Bremswirkung des Vielpolmotors 1 aus seiner Drehbewegung abgebremst werden, wobei die Bremswirkung auf einem Reibschluss zwischen dem Bremselement 25 und der Innenseite des ringförmigen Abschnitt 26 beruht. Hingegen wirkt die Blockiereinrichtung 27 durch den Eingriff des Blockierelementes 15 in die Aufnahmeöffnung 16 über einen Formschluss und wird vorzugsweise nur dann aktiviert, wenn der Rotorteil 12 bereits steht oder nur noch sehr langsam rotiert.

Beispielsweise kann zum Abbremsen und Blockieren des drehenden Rotorteils 12 zunächst die Bremseinrichtung 23 alternativ oder zusätzlich zur elektromotorischen Bremswirkung des Vielpolmotors 1 aktiviert werden, um die Drehbewegung des Rotorteils 12 und folglich des Drehkreuzes 13 der Karusselltür 100 zu verzögern. Wurde die Drehbewegung beendet oder rotiert der Rotor 12 nur noch sehr langsam, kann anschließend die Blockiereinrichtung 27 aktiviert werden, um den Rotorteil 12 durch einen Formschluss endgültig am Statorteil 10 festzusetzen, sodass sich auch das Drehkreuz 13 nicht mehr drehen lässt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, die im Rahmen der Ansprüche liegt.

### Bezugszeichenliste

- 100: Karusselltür

- 1: Vielpolmotor

- 10: Statorteil
- 11: Strukturbauteil
- 12: Rotorteil
- 13: Drehkreuz
- 14: Eingriffseinrichtung
- 15: Blockierelement
- 16: Aufnahmeöffnung
- 17: Magnetspule
- 18: Magnetanker
- 19: Eingriffsscheibe
- 20: Steuereinheit
- 21: Spulenelement
- 22: Magnetelement
- 23: Bremseinrichtung
- 24: Aktuator
- 25: Bremselement
- 26: ringförmiger Abschnitt
- 27: Blockiereinrichtung
- 28: Rahmen
- 29: Antriebsachse
- 30: Lageranordnung
- 31: Abtriebswelle
- 32: Außenfläche
- 33: Luftspalt
- 34: Schraubelement
- 35: Schraubelement
- 36: Durchgangsöffnung
- 37: mechanische Koppeleinrichtung

## Patentansprüche

1. Antriebseinheit für eine Karusselltür (100) mit einem elektronisch kommutierten Vielpolmotor (1) aufweisend einen scheibenförmigen oder topfförmigen Statorteil (10), der an einem ruhenden Strukturbauteil (11) der Karusselltür (100) anordbar ist, und aufweisend einen scheibenförmigen oder topfförmigen Rotorteil (12), der mit einem Drehkreuz (13) der Karusselltür (100) getriebelos verbindbar ist, wobei der Statorteil (10) und der Rotorteil (12) eine planparallele Anordnung zueinander aufweisen und wobei zwischen dem Statorteil (10) und dem Rotorteil (12) eine Eingriffseinrichtung (14) zum Eingriff in die Drehbewegung des Rotorteils (12) am Statorteil (10) angeordnet ist, **dadurch gekennzeichnet, dass** die Eingriffseinrichtung (14) als Blockiereinrichtung (27) zum Blockieren der Drehbewegung des Rotorteils (12) am Statorteil (10) ausgebildet ist, wobei die Blockiereinrichtung (27) ruhend am Statorteil (10) angeordnet ist und zum formschlüssigen Eingriff in den Rotorteil (12) ausgebildet ist, und die Blockiereinrichtung (27) einen Aktuator und ein Blockierelement (15) aufweist, das durch den Aktuator in eine Aufnahmeöffnung (16) im Rotorteil (12) formschlüssig einbringbar ist, wobei dass der Rotorteil (12) eine Eingriffsscheibe (19) aufweist, wobei die Eingriffsscheibe (19) eine und vorzugsweise eine Anzahl von Aufnahmeöffnungen (16) aufweist, in die das Blockierelement (15) bei einer Hubbewegung eingreift.

2. Antriebseinheit nach Anspruch 1, **dadurch gekennzeichnet, dass** der Aktuator der Blockiereinrichtung (27) eine Magnetspule (17) umfasst, die auf einen mit dem Blockierelement (15) verbundenen Magnetanker (18) wirkt, wenn die Magnetspule (17) elektrisch aktiviert wird und sodass das Blockierelement (15) insbesondere eine Hubbewegung ausführt.

3. Antriebseinheit nach einem der vorgenannten Ansprüche, **dadurch gekennzeichnet, dass** eine Steuereinheit (20) vorgesehen ist, die insbesondere im Bereich zwischen dem Statorteil (10) und dem Rotorteil (12) des Vielpolmotors (1) aufgenommen ist, wobei die Steuereinheit (20) zur Aktivierung der Eingriffseinrichtung (14) ausgebildet ist.

4. Antriebseinheit nach einem der vorgenannten Ansprüche, **dadurch gekennzeichnet, dass** zwischen dem Statorteil (10) und dem Rotorteil (12) eine Anzahl von Spulenelementen (21) angeordnet ist, die am Statorteil (10) aufgenommen sind, und wobei zwischen dem Statorteil (10) und dem Rotorteil (12) eine Anzahl von Magnetelementen (22) angeordnet ist, die am Rotorteil (12) angeordnet sind.

5. Antriebseinheit nach Anspruch 4 , **dadurch gekennzeichnet, dass** die Spulenelemente (21) auf einer Kreisbahn am Statorteil (10) angeordnet sind, sodass ein Spulenring gebildet ist, wobei die Eingriffseinrichtung (14) und insbesondere die Steuereinheit (20) im Bereich innerhalb des Spulenringes angeordnet ist.

6. Antriebseinheit nach einem der vorgenannten Ansprüche, **dadurch gekennzeichnet, dass** die Eingriffseinrichtung (14) als Bremseinrichtung (23) zum Bremsen der Drehbewegung des Rotorteils (12) am Statorteil (10) ausgebildet ist.

7. Antriebseinheit nach Anspruch 6, **dadurch gekennzeichnet, dass** die Bremseinrichtung (23) ruhend am Statorteil (10) angeordnet ist und zum reibschlüssigen Eingriff in den rotierenden Rotorteil (12) ausgebildet ist.

8. Antriebseinheit nach Anspruch 6 , **dadurch gekennzeichnet, dass** die Bremseinrichtung (23) einen Aktuator (24) und ein Bremselement (25) aufweist, wobei das Bremselement (25) durch Aktivieren des Aktuators (24) gegen einen scheibenförmigen und vorzugsweise ringförmigen Abschnitt (26) des Rotorteils (12) in Reibschluss bringbar ist.

9. Karusselltür mit einer Antriebseinheit nach einem der vorgenannten Ansprüche.

## Claims

1. A drive unit for a revolving door (100) with an electronically commutated multi-pol motor (1), including a disc-shaped or pot-shaped stator part (10), which can be disposed at a static structural component (11) of the revolving door (100), and including a disc-shaped or pot shaped rotor part (12), which is gearlessly connectable to a turnstile (13) of the revolving door (100), wherein the stator part (10) and the rotor part (12) have a plane-parallel arrangement with regard to each other, and wherein an engagement device (14) is disposed between the stator part (10) and the rotor part (12) for engaging in the rotary movement of the rotor part (12) at the stator part (10), **characterized in that** the engagement device (14) is embodied as a blocking device (27) for blocking the rotary movement of the rotor part (12) at the stator part (10), wherein the blocking device (27) is statically disposed at the stator part (10) and is embodied for positive engagement in the rotor part (12), and the blocking device (27) includes an actuator and a blocking element (15), which the actuator can positively bring into a reception opening (16) in the rotor part (12), wherein the rotor part (12) includes an engagement disc (19), wherein the engagement disc (19) includes one and preferably a number of reception openings (16), into which the blocking element (16) engages during a lifting movement.

2. The drive unit according to claim 1, **characterized in that** the actuator of the blocking device (27) comprises an electromagnetic coil (17), which acts on a magnetic armature (18) connected to the blocking element (15), if the electromagnetic coil (17) is electrically activated and such that the blocking element (15) in particular performs a lifting movement.

3. The drive unit according to any of the aforementioned claims, **characterized in that** a control unit (20) is provided, which in particular is accommodated in the area between the stator part (10) and the rotor part (12) of the multi-pol motor (1), wherein the control unit (20) is embodied for activating the engagement device (14).

4. The drive unit according to any of the aforementioned claims, **characterized in that** a number of coil elements (21) is disposed between the stator part (10) and the rotor part (12), which are accommodated at the stator part (10), and wherein a number of magnetic elements (22) is disposed between the stator part (10) and the rotor part (12), which are disposed at the rotor part (12).

5. The drive unit according to claim 4, **characterized in that** the coil elements (21) are disposed on a trajectory at the stator part (10), such that a coil ring is formed, wherein the engagement device (14) and in particular the control unit (20) is disposed in the area within the coil ring.

6. The drive unit according to any of the aforementioned claims, **characterized in that** the engagement device (14) is embodied as a brake device (23) for slowing down the rotary movement of the rotor part (12) at the stator part (10).

7. The drive unit according to claim 6, **characterized in that** the brake device (23) is statically disposed at the stator part (10) and is embodied for engagement by friction in the rotating rotor part (12).

8. The drive unit according to claim 6, **characterized in that** the brake device (23) includes an actuator (24) and a brake element (25), wherein the brake element (25) can be brought into frictional engagement against a disc-shaped and preferably ring-shaped section (26) of the rotor part (12) by activating the actuator (24).

9. A revolving door with a drive unit according to any of the aforementioned claims.

## Revendications

1. Unité d'entraînement pour une porte à tambour (100) avec un moteur multi-pôles (1) à commutation électronique, comprenant une partie stator (10) en forme de disque ou forme de pot, laquelle peut être agencée sur un composant de structure (11) statique de la porte à tambour (1), et comprenant une partie rotor (12) en forme de disque ou forme de pot, laquelle est connectable sans engrenage à un tourniquet (13) de la porte à tambour (100), dans laquelle la partie stator (10) et la partie rotor (12) ont un agencement à faces planes et parallèles l'une à l'autre, et dans laquelle est agencé entre la partie stator (10) et la partie rotor (12) un dispositif d'engagement (14) pour l'engagement dans le mouvement de rotation de la partie rotor (12) sur la partie stator (10), **caractérisée en ce que** le dispositif d'engagement (14) est aménagé comme dispositif de blocage (27) pour bloquer le mouvement de rotation de la partie rotor (12) sur la partie stator (10), dans laquelle le dispositif de blocage (27) est agencé de façon statique sur la partie stator (10) et est aménagé pour l'engagement par la forme dans la partie rotor (12), et le dispositif de blocage (27) comprend un actionneur et un élément de blocage (15), lequel par l'intermédiaire de l'actionneur est insérable par la forme dans une ouverture de réception (16) dans la partie rotor (12), dans laquelle la partie rotor (12) comprend un disque d'engagement (19), dans laquelle le disque d'engagement (19) comprend de préférence un nombre d'ouvertures de réception (16), dans lesquelles l'élément de blocage (15) engage lors d'un mouvement d'élévation.

2. Unité d'entraînement selon la revendication 1, **caractérisée en ce que** l'actionneur du dispositif de blocage (27) comprend une bobine électro-aimant (17), laquelle agit sur une armature d'aimant (18) qui est connecté à l'élément de blocage (15), lorsque la bobine électro-aimant (17) est activée électriquement et de sorte que l'élément de blocage (15) exécute tout particulièrement un mouvement d'élévation.

3. Unité d'entraînement selon l'une des revendications mentionnées ci-avant, **caractérisée en ce qu'**une unité de commande (20) est prévue, laquelle tout particulièrement est accommodée dans une région entre la partie stator (10) et la partie rotor (12) du moteur multi-pôles (1), dans laquelle l'unité de commande (20) est aménagée à l'activation du dispositif d'engagement (14).

4. Unité d'entraînement selon l'une des revendications mentionnées ci-avant, **caractérisée en ce que**, entre la partie stator (10) et la partie rotor (12) est agencé un nombre d'éléments bobines (21), lesquels sont accommodés sur la partie stator (10), et dans laquelle entre la partie stator (10) et la partie rotor (12) est agencé un nombre d'éléments à aimant (22), lesquels sont agencés sur la partie rotor (12).

5. Unité d'entraînement selon la revendication 4, **caractérisée en ce que** les éléments bobines (21) sont agencés sur une trajectoire circulaire sur la partie stator (10), de sorte qu'un anneau de bobine est aménagé, dans laquelle le dispositif d'engagement (14) et tout particulièrement l'unité de commande (20) sont agencés dans la région à l'intérieur de l'anneau de bobine.

6. Unité d'entraînement selon l'une des revendications mentionnées ci-avant, **caractérisée en ce que** le dispositif d'engagement (14) est aménagé comme dispositif de freinage (23) pour freiner le mouvement de rotation de la partie rotor (12) sur la partie stator (10).

7. Unité d'entraînement selon la revendication 6, **caractérisée en ce que** le dispositif de freinage (23) est agencé de façon statique sur la partie stator (10) et est aménagé pour l'engagement par friction dans la partie rotor (12) rotative.

8. Unité d'entraînement selon la revendication 6, **caractérisée en ce que** le dispositif de freinage (23) comprend un actionneur (24) et un élément de freinage (25), dans laquelle l'élément de freinage (25) peut être amené en entraînement par friction par activation de l'actionneur (24) contre une section (26) en forme de disque et de préférence en forme d'anneau de la partie rotor (12).

9. Porte à tambour avec une unité d'entraînement selon l'une des revendications mentionnées ci-avant.
